# EUROPÄISCHE PATENTSCHRIFT

(11) **EP 2 452 550 B1**
(45) Veröffentlichungstag und Bekanntmachung des Hinweises auf die Patenterteilung: **10.05.2017**
(21) Anmeldenummer: 11178215.7
(22) Anmeldetag: 22.08.2011
(51) Int. Cl.: A01D 43/08

(54) **Landwirtschaftliche Erntemaschine**
Agricultural harvester
Moissonneuse agricole

(30) Priorität: 12.11.2010 DE 102010051068
(43) Veröffentlichungstag der Anmeldung: 16.05.2012
(73) Patentinhaber: CLAAS Selbstfahrende Erntemaschinen GmbH, 33428 Harsewinkel (DE)
(72) Erfinder: Diekhans, Norbert, Dr., 33335 Gütersloh (DE); Huster, Jochen, 33330 Gütersloh (DE); Claussen, Frank, 33428 Harsewinkel (DE)

(56) Entgegenhaltungen:
- EP-A1- 2 098 109
- EP-A1- 2 232 978
- EP-A2- 2 057 882

## Beschreibung

Die Erfindung betrifft eine landwirtschaftliche Erntemaschine mit einem Häckselaggregat zum Zerkleinern von Erntegut und mit einer Kamera, die dem Häckselaggregat bezogen auf einen durch das Häckselaggregat führenden Erntegutstrom nachgeordnet ist, um das zerkleinerte Erntegut optisch zu erfassen und Bilder des zerkleinerten Ernteguts zu erzeugen.

Zur Ernte von Silomais, das heißt nach der Ernte in einem Silo zu konservierendem Mais, werden bevorzugt selbstfahrende Feldhäcksler eingesetzt. Diese nehmen mittels eines Vorsatzgeräts zu erntendes Gut vom Feld auf und führen es Einzugsorganen zu, wo eine Komprimierung durch gegeneinander wirkende Vorpresswalzen stattfindet. Die Vorpresswalzen fördern das Erntegut anschließend in ein Häckselaggregat, in welchem das Erntegut durch Zusammenwirkung einer mit Schneidmessern bestückten rotierenden Häckseltrommel und einer ruhenden Gegenschneide geschnitten ("gehäckselt") wird. Anschließend gelangt das Erntegut durch einen Förderschacht, in dem Nachbeschleuniger zur Beschleunigung des Ernteguts angeordnet ist, in eine Überladeeinrichtung, um auf ein neben dem Feldhäcksler fahrendes Transportfahrzeug ausgeworfen zu werden. Um bei der Ernte von Mais die energiereichen Maiskörner aufzubrechen und diese damit für die Tiere verdaubar zu machen, sind im Förderschacht weiterhin Konditionierwalzen angeordnet, zwischen denen die Maiskörner aufgebrochen werden.

Zur Gewährleistung einer guten Futterqualität, sollten die Eigenschaften des verarbeiteten Ernteguts möglichst während der Ernte überwacht werden. Da bereits das Fahren der Maschine sowie die Beobachtung und Steuerung des Überladevorgangs die Aufmerksamkeit des Fahrers sehr in Anspruch nehmen, ist eine maschinengestützte Überwachung der Häckselgutqualität erstrebenswert.

Aus der EP 2 098 109 A1 ist ein Feldhäcksler bekannt, dessen mit einer an der Überladeeinrichtung angeordneten Kamera erzeugten Bilder des Häckselguts ausgewertet werden. Dabei findet ein virtuelles Sieben der Erntgutpartikel statt, wodurch sich - bei Nutzung unterschiedlicher Gitterweiten des virtuellen Siebs - eine Mengenverteilung bestimmter Partikelgrößen ermitteln lässt. Durch Betrachtung allein der Partikelgrößen lässt sich die Qualität des Häckselguts jedoch nicht ausreichend bestimmen, da für die Qualität von Häckselgut weitere Kriterien eine Rolle spielen.

Aus der EP 2 232 978 A1 ist eine gattungsgemäße landwirtschaftliche Erntemaschine bekannt.

Es ist daher eine Aufgabe der vorliegenden Erfindung, eine landwirtschaftliche Erntemaschine der eingangs genannten Art anzugeben, mit der sich die Qualität des zerkleinerten Ernteguts bei komfortabler Bedienung differenziert bestimmten lässt.

Die genannte Aufgabe wird gelöst durch eine landwirtschaftliche Erntemaschine mit den Merkmalen des Anspruchs 1. Diese Erntemaschine zeichnet sich dadurch aus, dass die Kamera mit einer Bildauswertungseinrichtung verbunden ist, die eingerichtet ist, in den erzeugten Bildern Kanten zu erkennen, um daraus Eigenschaften des zerkleinerten Ernteguts abzuleiten. Der erfindungsgemäßen Lösung liegt zunächst die Erkenntnis zugrunde, dass sich die Qualität von zerkleinertem Erntegut durch die Größenverteilung darin vorhandener Partikel allein nur in begrenztem Maße bestimmen lässt. Es wurde erkannt, dass es für eine weitergehende Qualitätsbestimmung zweckmäßig ist, im zerkleinerten Erntegut auch gezielt nach Bestandteilen suchen zu können, wie beispielsweise nach Lieschblättern, Stängelstücken, ganzen Maiskörnern und/oder sonstigen denkbaren Bestandteilen, die beispielsweise Anzeichen für eine unvollständige Zerkleinerung durch den Feldhäcksler sind. So kann es insbesondere bei sich im Wesentlichen in eine Längsrichtung erstreckenden Lieschblättern oder Stängelstücken vorkommen, dass diese parallel ausgerichtet zu den Schneidkanten der Häckselmesser das Häckselaggregat durchlaufen, was zur Folge haben kann, dass diese gar nicht oder nur in Längsrichtung geschnitten werden. Eine anhand von Einzugsgeschwindigkeit und Häckseltrommeldrehzahl eingestellte Schnittlänge wird in diesen Fällen deutlich überschritten.

Erfindungsgemäß wurde für die Suche nach Erntegutbestandteilen eine vorteilhafte Umsetzungsmöglichkeit gefunden, wonach die mit der Kamera verbundene Bildauswertungseinrichtung in den Kamerabildern des zerkleinerten Ernteguts vorhandene Kanten erkennen kann. Dem liegt die Erkenntnis zugrunde, dass sich im Bild sichtbare Kanten vorhandener Häckselgutbestandteile vorteilhaft maschinell erkennen lassen, da die Umrisse (Kanten) zumindest einiger Häckselgutbestandteile im erzeugten Bild einen starken und/oder über eine gewisse Länge verlaufenden Kontrast gegenüber dem übrigen zerkleinerten Erntegut aufweisen. Weiterhin ermöglichen charakteristische Kantenverläufe der Bildauswertungseinrichtung eine Zuordnung zu verschiedenen Häckselgutbestandteilen. Eine verhältnismäßig eindeutige Zuordnung anhand des Kantenverlaufs ist beispielsweise bei Lieschblättern, Stängelstücken oder ganzen Maiskörnern der Fall. Aus den im Bild des Ernteguts erkannten Kanten leitet die Bildauswertungseinrichtung erfindungsgemäß Eigenschaften des Ernteguts ab, wie beispielsweise einen Anteil von im zerkleinerten Erntegut vorhandenen Lieschblättern, Stängelstücken oder ganzen Maiskörnern, womit eine differenzierte Qualitätsaussage über das Ernteguts vorliegt. Die genannte Aufgabe wird damit gelöst.

Zur Erkennung von im erzeugten Bild sichtbaren Kanten von Erntegutbestandteilen ist es vorteilhaft, dass die Bildauswertungseinrichtung im Bild nach Kontrasten sucht, die über eine vorgebbare Mindestlänge verlaufen. Dadurch ist gewährleistet, dass nur Erntegutbestandteile ab einer bestimmten Größe bei der Auswertung berücksichtigt werden. Auch anhand des Verlaufs des Kontrasts (gekrümmt oder gerade) kann die Bildauswertungseinrichtung eine Zuordnung treffen, wobei insbesondere Lieschblätter oder Stängelstücke gerade Kantenverläufe und somit gerade Kontrastverläufe aufweisen, während sich beispielsweise Maiskörner an gekrümmten (annähernd runden) Kontrastverläufen erkennen lassen. Erfindungsgemäß ist die Bildauswertungseinrichtung eingerichtet, anhand erkannter im Wesentlichen gerade verlaufender Kanten einen im Erntegut vorhandenen Anteil von Stängeln zu bestimmen, was auf der Grundidee basiert, dass Stängel bzw. Stängelstücke im Bild lange, kontrastreiche Kanten aufweisen.

Alternativ oder ergänzend ist die Bildauswertungseinrichtung eingerichtet, anhand erkannter im Wesentlichen gerade verlaufender Kanten einen im Erntegut vorhandenen Anteil von Lieschblättern zu bestimmen, da diese im Bild lange, kontrastreiche Kanten aufweisen. Zur Unterscheidung von Lieschblättern gegenüber Stängelstücken kann die Bildauswertungseinrichtung weitere Kriterien berücksichtigen wie beispielsweise die Kantenlänge, die Farbe, einen ermittelten Flächeninhalt oder sonstige bildlich erfasste Merkmale. Ergänzend ist vorteilhaft die Bildauswertungseinrichtung betreibbar, anhand erkannter Kantenverläufe einen im Erntegut vorhandenen Anteil von Maiskörnern zu bestimmen. Dazu ist es denkbar, aus einem im Bild sichtbaren gekrümmten, insbesondere einem geschlossenen, annähernd runden Kantenverlauf auf das Vorliegen eines unzerkleinerten Maiskorns zu schließen. Anhand des Kantenverlaufs ist weiterhin denkbar, dass die Bildauswertungseinrichtung die Größe des Maiskorns - beispielsweise anhand eines erkannten Durchmessers eines geschlossenen Kantenverlaufserrechnet.

Gemäß einer vorteilhaften Weiterbildung der Erfindung weist der Feldhäcksler eine Ausgabeeinrichtung auf, die betreibbar ist, eine mit den ermittelten Eigenschaften des Ernteguts in Bezug stehende Information an einen Bediener der Erntemaschine auszugeben. Es kann sich dabei um jedwede Art von Ausgabe (optisch, akustisch etc.) handeln.

Die Information kann inhaltlich unterschiedlich aufgebaut sein bzw. unterschiedlichen Zwecken dienen. Beispielsweise könnte die Information dem Bediener das Überschreiten eines festlegbaren Grenzwerts einer Ernteguteigenschaft signalisieren. In diesem Fall erhält der Bediener demnach eine Information im Sinne einer Warnmeldung oder eines Signals, wenn beispielsweise im Erntegut eine zuvor vom Bediener festgelegte Höchstmenge von Lieschblättern im Erntegut erkannt wird. Dem Bediener kann eine solche Information dazu dienen, selbständig eine Maßnahme zu ergreifen, um die Überschreitung des Grenzwerts zu beheben.

Die Information kann daneben einfach in der Menge des im Erntegut vorliegenden Erntegutbestandteils bestehen. Dem Bediener wird dabei über die Ausgabeeinrichtung eine Mengenangabe des ermittelten Erntegutbestandteils gemacht, wobei die Menge als absoluter oder relativer (mit Bezugsgröße) Wert ausgegeben werden kann.

Gemäß einer Weiterbildung der Erfindung kann darüber hinaus vorgesehen sein, dass die Information eine Empfehlung von Maschineneinstellungen an den Bediener beinhaltet, mit welcher sich die Qualität des Ernteguts verbessern lässt. Zur Definition einer dabei verfolgten Qualität des Ernteguts ist es zweckmäßig, anhand vom Bediener zuvor einzugebender oder aus einem Speicher abrufbarer Kriterien festzulegen, dass die abgegebene Empfehlung auf die Erreichung der so definierten Qualität gerichtet ist.

Zur weiteren Arbeitserleichterung beim Erntebetrieb sieht eine weitere Ausgestaltung der Erfindung eine mit der Bildauswertungseinrichtung verbundene Steuereinrichtung vor, die in Abhängigkeit ermittelter Eigenschaften des Ernteguts zumindest ein Arbeitsaggregat der Erntemaschine ansteuert, um die Qualität des Ernteguts zu verbessern. Damit ist ein selbsttätiges Reagieren der Erntemaschine auf die ermittelten Ernteguteigenschaften möglich, ohne dass der Maschinenbediener seine Aufmerksamkeit darauf zu lenken braucht. Eine Ansteuerung unterschiedlicher Arbeitsaggregate ist denkbar. Auch kann vorgesehen sein, dass jeweils vor Durchführung einer Ansteuerung eine Bestätigung der Maßnahme vom Bediener abgefragt wird, um unerwünschtes selbsttätiges Eingreifen der Maschine zu verhindern.

In vorteilhafter Weise ist die Steuereinrichtung betreibbar, in Abhängigkeit des Anteils im Erntegut erkannter Stängel die Schnittlänge des Ernteguts zu verändern. Beim Häckseln bestimmt sich die Schnittlänge des Ernteguts insbesondere durch Zusammenwirkung von Häckseltrommeldrehzahl und Zuführgeschwindigkeit des Einzugsorgans, wobei sich mit steigender Häckseltrommeldrehzahl bzw. sinkender Zuführgeschwindigkeit - bei jeweils konstant gehaltener anderer Größe - die Schnittlänge verkürzt.

Vorteilhaft sorgt die Steuereinrichtung durch entsprechende Ansteuerung von Häckseltrommel und/oder Einzugsorgan und/oder Vorsatzgerät für eine Verkürzung der Schnittlänge bei steigendem Stängelanteil im Erntegut, da dies den Stängelanteil sinken lässt.

Auf weiterhin vorteilhafte Weise ist die Steuereinrichtung betreibbar, in Abhängigkeit des Anteils im Erntegut erkannter Lieschblätter eine das Schneidverhalten des Häckselaggregats verbessernde Maßnahme einzuleiten oder durchzuführen. Dieser Gedanke lässt sich beispielsweise umsetzen, indem die Steuereinrichtung bei Überschreiten eines vorgebbaren Lieschblattanteils im Erntegut eine dem Häckselaggregat zugeordnete Schleifeinrichtung oder eine dem Häckselaggregat zugeordnete Gegenschneidverstelleinrichtung aktiviert, da durch diese Maßnahme der Lieschblattanteil wieder verringert werden kann.

Alternativ oder ergänzend kann die Steuereinrichtung betreibbar sein, in Abhängigkeit des Anteils im Erntegut erkannter Maiskörner eine dem Häckselaggregat nachgeordnete Konditioniereinrichtung derart anzusteuern, dass ein vorgebbarer Anteil von Maiskörnern im Erntegut nicht überschritten wird. Die Ansteuerung soll in diesem Fall dazu dienen, weniger bzw. gar keine unzerkleinerten Maiskörner im Häckselgut zu erhalten. Konkret kann die Ansteuerung in einer Veränderung des Walzenabstands der Crackerwalzen der Konditioniereinrichtung bestehen. Daneben könnte durch die Ansteuerung die Drehzahldifferenz der Crackerwalzen verändert oder die zwischen den Crackerwalzen wirkende Presskraft verändert werden.

Die Erfindung wird im Folgenden unter Hinweis auf die beigefügten Figuren anhand eines Ausführungsbeispiels näher erläutert. Daraus ergeben sich auch weitere Einzelheiten und Vorteile der Erfindung. Es zeigen:
- Fig. 1: eine schematische Seitenansicht eines erfindungsgemäßen Feldhäckslers,
- Fig. 2: eine vereinfachte schematische Ansicht eines mit der Kamera des erfindungsgemäßen Feldhäckslers aufgenommenen Bildes des zerkleinerten Ernteguts.

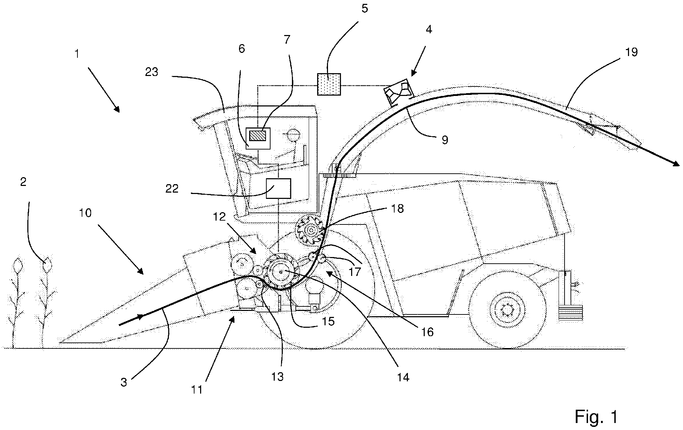

In Fig. 1 ist eine selbstfahrende landwirtschaftliche Erntemaschine in Form eines Feldhäckslers 1 dargestellt. Der Feldhäcksler 1 verfügt über eine nicht näher bezeichnete Vorder- und Hinterachse mit zugehörigen Rädern und eignet sich zur Fahrt über ein Feld, um angedeuteten Pflanzenbestand 2 zu ernten. Ein durch den Feldhäcksler 1 im Erntebetrieb geförderter Erntegutstrom 3 ist als schwarze Linie (mit Richtungsangabe durch Pfeile) angedeutet.

Im Erntebetrieb schneidet der Feldhäcksler 1 mittels eines Vorsatzgeräts 10 den Pflanzenbestand 2 vom Feld ab, um die abgetrennten Pflanzenteile als Erntegutstrom 3 nachgeordneten Einzugsorganen 11 zuzuführen, welche unter anderem zwei Vorpresswalzenpaare mit rotierenden Vorpresswalzen (nicht einzeln bezeichnet) umfassen, die den Erntegutstrom 3 zu einer Erntegutmatte vorverdichten und in ein Häckselaggregat 12 fördern.

Das Häckselaggregat 12 umfasst im Wesentlichen eine rotierende Häckseltrommel 14 und eine dieser gegenüber ruhende Gegenschneide 13. Die Häckseltrommel 14 ist mit einer Vielzahl von Schneidmessern 15 bestückt und dreht sich im Erntebetrieb gemäß Darstellung in Fig. 1 entgegen dem Uhrzeigersinn, um in Zusammenwirkung mit der ruhenden Gegenschneide 13 das Erntegut zu schneiden ("häckseln").

Nach Zerkleinerung im Häckselaggregat 14 durchläuft das Erntegut einen hinter einer Fahrerkabine 23 aufsteigenden Förderschacht 16. Im Förderschacht 16 sind eine Konditioniereinrichtung mit zwei rotierenden Konditionierwalzen 17 und ein Nachbeschleuniger 18 in Bezug auf die Richtung des Erntegutstroms 3 nacheinander angeordnet. Der Erntegutstrom 3 läuft zwischen den angetriebenen Konditionierwalzen 17 hindurch, wobei deren Reibflächen dazu dienen, im Erntegut enthaltene Maiskörner aufzubrechen und damit für Tiere verdaubar zu machen. Der Nachbeschleuniger 18 dient zur anschließenden Beschleunigung des Ernteguts, um einen anschließenden Auswurf über eine sich an den Förderschacht 16 anschließende Überladeeinrichtung 19 ("Auswurfkrümmer") aus dem Feldhäcksler 1 auf ein (nicht gezeigtes) Transportfahrzeug zu ermöglichen.

Aufgrund unterschiedlichster Einflussfaktoren, wie unter anderem sich verändernder Erntebedingungen (Erntegutart, Erntegutfeuchte, Erntegutzusammensetzung etc.), veränderter Einstellungen bzw. Abnutzungen an Maschinenkomponenten (Vorfahrtgeschwindigkeit, Schnittlänge, Spaltweite der Konditionierwalzen, Messerschärfe, Gegenschneidenzustand bzw. -abstand etc.) schwankt die Qualität des ausgeworfenen Häckselguts beim Erntebetrieb teils erheblich.

Zur Überwachung der Qualität des Häckselprozesses ist der Feldhäcksler 1 mit einer Kamera 4 ausgestattet, die das im Feldhäcksler 1 bearbeitete Erntegut unmittelbar vor dem Überladen auf ein Transportfahrzeug zur Qualitätsbestimmung optisch erfasst. Die Kamera 4 ist zu diesem Zweck in Bezug auf den Erntegutstrom 3 sämtlichen Bearbeitungseinrichtungen des Feldhäckslers 1 nachgeordnet und hierzu an einer Rückwand der Überladeeinrichtung 19 angeordnet. Das durch die Überladeeinrichtung 19 geförderte zerkleinerte Erntegut 9 wird durch die Kamera 4 optisch erfasst, wobei die Kamera 4 Bilder 5 (vereinfacht als Kasten angedeutet) des zerkleinerten Ernteguts 9 erzeugt. Aufgrund der in der Überladeeinrichtung 19 vorherrschenden hohen Fördergeschwindigkeit und der geringen Lichteinstrahlung ist vorteilhaft die Kamera 4 - wie angedeutet - zusätzlich mit einer Beleuchtungseinrichtung (z.B. Stroboskop) ausgestattet, die beispielsweise auf das zerkleinerte Erntegut 9 gerichtete Lichtblitze abgibt, um auswertbare Bilder 5 erzeugen zu können.

Die Kamera 4 ist über eine Signalleitung mit einer Bildauswertungseinrichtung 6 verbunden, um die von der Kamera 4 erzeugten Bilder 5 des zerkleinerten Ernteguts 9 zu empfangen. Die Bildauswertungseinrichtung 6 ist in der Lage, in den erhaltenen Bildern 5 nach Kanten 8 zu suchen, um daraus Eigenschaften des zerkleinerten Ernteguts 9 abzuleiten.

Die Bildauswertungseinrichtung 6 verfügt gemäß in Fig. 1 gezeigtem Ausführungsbeispiel über eine optische Ausgabeeinrichtung 7 in Form einer für einen in der Fahrerkabine 23 arbeitenden Maschinenbediener sichtbaren Anzeige. Über die Ausgabeeinrichtung 7 werden dem Maschinenbediener von der Bildauswertungseinrichtung 6 ermittelte Eigenschaften des Ernteguts 9 mitgeteilt. Dies kann beispielsweise durch Mengenangabe eines im zerkleinerten Erntegut 9 erkannten Erntegutbestandteils erfolgen. Zusätzlich können dem Bediener über die Ausgabeeinrichtung 7 Empfehlungen geliefert werden, mit welchen Maschineneinstellungen oder sonstigen Maßnahmen die Qualität des Häckselguts verbessert werden kann.

Gemäß in Fig. 1 gezeigtem Ausführungsbeispiel verfügt der Feldhäcksler 1 daneben über eine mit der Bildauswertungseinrichtung 6 signalmäßig verbundene Steuereinrichtung 22. Diese ermöglichtabhängig von den ermittelten Eigenschaften des Ernteguts 9 - eine selbsttätige Ansteuerung eines Arbeitsaggregats des Feldhäckslers 1 oder die selbsttätige Einleitung einer sonstigen Maßnahme, um die Qualität des Ernteguts 9 zu verbessern. Durch die Ansteuerung können beispielsweise Drehzahlen von Einzugsorganen 11, Häckseltrommel 14, Konditionierwalzen 17 (ggf. deren Drehzahlverhältnis) verändert werden. Daneben könnten der Gegenschneidenabstand und/oder der Konditionierwalzenspalt durch die Ansteuerung verändert werden. Die Auslösung eines Schleifvorgangs der Schneidmesser 15 ist ebenfalls denkbar.

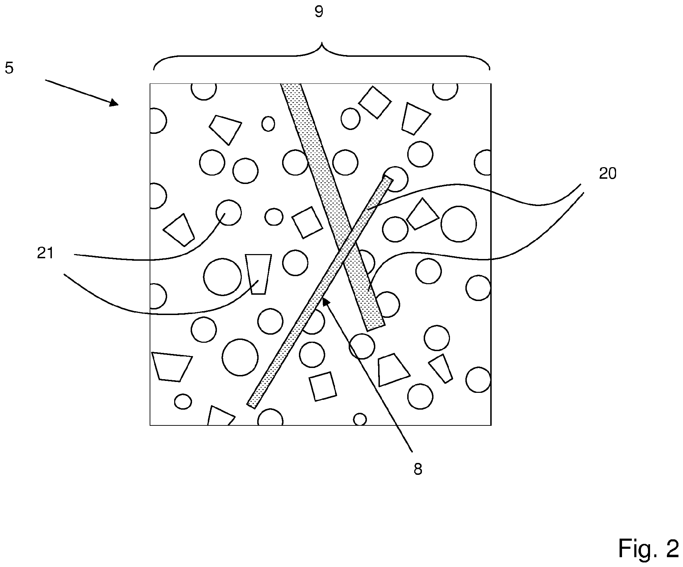

Fig. 2 zeigt in vereinfachter schematischer Darstellung ein mit der Kamera 4 des Feldhäckslers 1 aufgenommenes Bild 5 des zerkleinerten Ernteguts 9. Zu sehen ist - aus Perspektive der an der Rückwand der Überladeeinrichtung 19 befestigten Kamera 4 gemäß Fig. 1 - das an der Kamera 4 "vorbei fliegende" zerkleinerte Erntegut 9 in einer Momentaufnahme. Gemäß Fig. 2 besteht das beispielhaft dargestellte Erntegut 9 aus verschiedenen Bestandteilen, wozu hier eine Vielzahl von Partikeln 21 unterschiedlicher Form und Größe sowie zwei Stängelstücke 20 zählen.

Zur Ableitung von Eigenschaften des Ernteguts 9 erkennt die Bildauswertungseinrichtung 6 im erfassten Ausschnitt des Erntguts 9 (Bild 5) vorhandene Kanten 8. Dies geschieht vorteilhaft dadurch, dass im Bild 5 bestehende Kontraste, die über eine gewisse Mindestlänge verlaufen und eine gewisse Intensität aufweisen, wie dies vor allem entlang der Kanten 8 der Stängelstücke 20 der Fall ist, mittels der Bildauswertungseinrichtung 6 gesucht und identifiziert werden. Anhand des geraden Kantenverlaufs der Stängelstücke 20 über eine deutlich höhere Länge als dies bei den Partikeln 21 der Fall ist, kann die Bildauswertungseinrichtung 6 die Stängelstücke 20 klar der Kategorie eines Stängelstücks zuordnen. Abhängig von der Anzahl identifizierter Stängelstücke in einem Bild 5 - bei Betrachtung einer Serie mehrerer Bilder 5 lassen sich noch genauere Aussagen treffen - ist die Bildauswertungseinrichtung 6 in der Lage, ein Häufigkeitsmaß (beispielsweise Stängelzahl pro Erntgutmenge) zu errechnen. Eine entsprechende Ausgabe an den Bediener über eine Ausgabeeinrichtung 7 ist damit möglich. Entsprechend können mittels der Steuereinrichtung 22 Maschinenverstellungsmaßnahmen durchgeführt werden, um dadurch ggf. automatisierten Einfluss auf die Eigenschaften des Erntguts 9 zu nehmen.

Zusätzlich zur beschriebenen Kantenerkennung ist es denkbar, dass die Bildauswertungseinrichtung 6 weitere im Bild 5 enthaltene Merkmale zur Auswertung heranzieht. Beispielsweise kann die Kantenerkennung vorteilhaft mit einer Farbauswertung kombiniert werden.

Es sei darauf hingewiesen, dass eine Auswertung gemäß Kantenanalyse beispielhaft für Stängelstücke 20 beschrieben wurde, dass jedoch auf ähnliche Weise auch andere Erntegutbestandteile identifiziert werden können, die eine charakteristische per Kantenverlauf erkennbare Form aufweisen. Dies ist beispielsweise bei Lieschblättern der Fall. Denkbar ist ebenfalls, ganze Maiskörner im Erntegut zu erkennen, wobei hier statt eines gerade Kantenverlaufs nach einem geschlossenen annähernd runden Kantenverlauf, ggf. in Kombination mit einem Durchmessermaß zu suchen ist. Eine Kombination mit einer Farbauswertung kann auch hier vorteilhaft sein, insbesondere da sich Maiskörner anhand der gelben Farbe von übrigen Erntegutbestandteilen unterscheiden.

### Bezugszeichenliste

- 1: Feldhäcksler
- 2: Pflanzenbestand
- 3: Erntegutstrom
- 4: Kamera
- 5: Bild
- 6: Bildauswertungseinrichtung
- 7: Anzeige
- 8: Kante
- 9: zerkleinertes Erntegut
- 10: Vorsatzgerät
- 11: Einzugsorgane
- 12: Häckselaggregat
- 13: Gegenschneide
- 14: Häckseltrommel
- 15: Schneidmesser
- 16: Förderschacht
- 17: Konditionierwalzen
- 18: Nachbeschleuniger
- 19: Überladeeinrichtung
- 20: Stängelstück (längs geschnitten)
- 21: Partikel
- 22: Steuereinrichtung
- 23: Fahrerkabine

## Patentansprüche

1. Landwirtschaftliche Erntemaschine (1) mit einem Häckselaggregat (12) zum Zerkleinern von Erntegut und einer Kamera (4), die dem Häckselaggregat (12) nachgeordnet ist, um das zerkleinerte Erntegut (9) optisch zu erfassen und Bilder (5) des zerkleinerten Ernteguts (9) zu erzeugen, wobei die Kamera (4) mit einer Bildauswertungseinrichtung (6) verbunden ist, wobei die Bildauswertungseinrichtung (6) dazu eingerichtet ist, in den erzeugten Bildern (5) Kanten (8) zu erkennen, um daraus Eigenschaften des zerkleinerten Ernteguts (9) abzuleiten und anhand von Kantenverläufen eine Zuordnung zu verschiedenen Häckselgutbestandteilen zu ermöglichen, **dadurch gekennzeichnet, dass** die Bildauswertungseinrichtung (6) dazu eingerichtet ist, anhand erkannter im Wesentlichen gerade verlaufender Kanten (8) einen im Erntegut (9) vorhandenen Anteil von Stängeln (20) und/oder Lieschblättern zu bestimmen.

2. Landwirtschaftliche Erntemaschine nach Anspruch 1, **dadurch gekennzeichnet, dass** die Bildauswertungseinrichtung (6) zur Erkennung von Kanten (8) in den erzeugten Bildern (5) nach Kontrasten sucht, die über eine vorgebbare Mindestlänge verlaufen.

3. Landwirtschaftliche Erntemaschine nach Anspruch 1 oder 2, **gekennzeichnet durch** eine Ausgabeeinrichtung (7), die betreibbar ist, eine mit den ermittelten Eigenschaften des Ernteguts (9) in Bezug stehende Information an einen Bediener der Erntemaschine (1) auszugeben.

4. Landwirtschaftliche Erntemaschine nach Anspruch 3, **dadurch gekennzeichnet, dass** die Information dem Bediener das Überschreiten eines festlegbaren Grenzwerts einer Ernteguteigenschaft signalisiert.

5. Landwirtschaftliche Erntemaschine nach Anspruch 3 oder 4, **dadurch gekennzeichnet, dass** die Information die Menge zumindest eines im Erntegut vorliegenden Erntegutbestandteils (20) ist.

6. Landwirtschaftliche Erntemaschine nach einem der Ansprüche 3 bis 5, **dadurch gekennzeichnet, dass** die Information eine Empfehlung von Maschineneinstellungen an den Bediener beinhaltet, mit welcher sich die Qualität des Ernteguts (9) verbessern lässt.

7. Landwirtschaftliche Erntemaschine nach einem der Ansprüche 1 bis 6, **gekennzeichnet durch** eine mit der Bildauswertungseinrichtung (6) verbundene Steuereinrichtung (22), die in Abhängigkeit ermittelter Eigenschaften des Ernteguts (9) zumindest ein Arbeitsaggregat (11, 12, 13, 14, 17) der Erntemaschine (1) ansteuert, um die Qualität des Ernteguts (9) zu verbessern.

8. Landwirtschaftliche Erntemaschine nach Anspruch 7, **dadurch gekennzeichnet, dass** die Steuereinrichtung (22) betreibbar ist, in Abhängigkeit des Anteils im Erntegut (9) erkannter Stängel (20) die Schnittlänge des Ernteguts (9) zu verändern.

9. Landwirtschaftliche Erntemaschine nach Anspruch 8, **dadurch gekennzeichnet, dass** die Steuereinrichtung (22) mit steigendem Stängelanteil die Schnittlänge verkürzt.

10. Landwirtschaftliche Erntemaschine nach einem der Ansprüche 7 bis 9, **dadurch gekennzeichnet, dass** die Steuereinrichtung (22) betreibbar ist, in Abhängigkeit des Anteils im Erntegut erkannter Lieschblätter eine das Schneidverhalten des Häckselaggregats (12) verbessernde Maßnahme einzuleiten oder durchzuführen.

11. Landwirtschaftliche Erntemaschine nach Anspruch 10, **dadurch gekennzeichnet, dass** die Steuereinrichtung (22) bei Überschreiten eines vorgebbaren Lieschblattanteils im Erntegut (9) eine dem Häckselaggregat (12) zugeordnete Schleifeinrichtung oder eine dem Häckselaggregat zugeordnete Gegenschneidverstelleinrichtung aktiviert.

## Claims

1. An agricultural harvester (1) comprising a chopping assembly (12) for chopping up crop material and a camera (4) arranged downstream of the chopping assembly (12) for optically detecting the chopped crop material (9) and producing images (5) of the chopped crop material (9), the camera (4) being connected to an image evaluation device (6), wherein the image evaluation device (6) is adapted to recognise edges (8) in the images (5) produced in order to deduce therefrom properties of the chopped crop material (9) and on the basis of edge configurations to permit association with different chopped material constituents, **characterised in that** the image evaluation device (6) is adapted on the basis of recognised edges (8) which extend substantially straight a proportion in the crop material (9) of stalks (20) and/or husk leaves.

2. An agricultural harvester according to claim 1 **characterised in that** the image evaluation device (6) for recognising edges (8) in the images (5) produced looks for contrasts which extend over a predeterminable minimum length.

3. An agricultural harvester according to claim 1 or claim 2 **characterised by** an output device (7) operable to output to an operator of the harvester (1) information related to the ascertained properties of the crop material (9).

4. An agricultural harvester according to claim 3 **characterised in that** the information signals to the operator that a definable limit value of a crop material property has been exceeded.

5. An agricultural harvester according to claim 3 or claim 4 **characterised in that** the information is the amount of at least one crop material constituent (20) present in the crop material.

6. An agricultural harvester according to one of claims 3 to 5 **characterised in that** the information includes a recommendation of machine settings to the operator, with which the quality of the crop material (9) can be improved.

7. An agricultural harvester according to one of claims 1 to 6 **characterised by** a control device (22) which is connected to the image evaluation device (6) and which in dependence on ascertained properties of the crop material (9) actuates at least one working assembly (11, 12, 13, 14, 17) of the harvester (1) to improve the quality of the crop material (9).

8. An agricultural harvester according to claim 7 **characterised in that** the control device (22) is operable to alter the cut length of the crop material in dependence on the proportion of stalks (20) detected in the crop material (9).

9. An agricultural harvester according to claim 8 **characterised in that** the control device (22) reduces the cut length with an increasing proportion of stalks.

10. An agricultural harvester according to one of claims 7 to 9 **characterised in that** the control device (22) is operable in dependence on the proportion of husk leaves detected in the crop material to initiate or implement an action for improving the cutting performance of the chopping assembly (12).

11. An agricultural harvester according to claim 10 **characterised in that** when a predeterminable proportion of husk leaves in the crop material (9) is exceeded the control device (22) activates a grinding device associated with the chopping assembly (12) or a counterpart cutting bar adjusting device associated with the chopping assembly.

## Revendications

1. Machine agricole de récolte (1) comprenant un organe hacheur (12) pour broyer du produit récolté et une caméra (4) qui est disposée en aval de l'organe hacheur (12) pour détecter optiquement le produit récolté broyé (9) et produire des images (5) du produit récolté broyé (9), la caméra (4) étant reliée à un dispositif d'analyse d'images (6), le dispositif d'analyse d'images (6) étant agencé pour reconnaître des arêtes (8) sur les images produites (5) afin d'en déduire des propriétés du produit récolté broyé (9) et, à l'aide de profils d'arêtes, de permettre une attribution à divers composants du produit haché, **caractérisée en ce que** le dispositif d'analyse d'images (6) est agencé pour déterminer une proportion, présente dans le produit récolté (9), de tiges (20) ou de feuilles d'enveloppe à l'aide d'arêtes à tracé sensiblement rectiligne (8) reconnues.

2. Machine agricole de récolte selon la revendication 1, **caractérisée en ce que**, pour reconnaître des arêtes (8) dans les images produites (5), le dispositif d'analyse d'images (6) cherche des contrastes qui s'étendent sur une longueur minimale prescriptible.

3. Machine agricole de récolte selon la revendication 1 ou 2, **caractérisée par** un dispositif d'édition (7) qui est exploitable afin d'éditer, pour un utilisateur de la machine de récolte (1), une information en rapport avec les propriétés détectées du produit récolté (9).

4. Machine agricole de récolte selon la revendication 3, **caractérisée en ce que** l'information signale à l'utilisateur le dépassement d'une valeur limite définissable d'une propriété du produit récolté.

5. Machine agricole de récolte selon la revendication 3 ou 4, **caractérisée en ce que** l'information est la quantité au moins d'un composant de produit récolté (20) présent dans le produit récolté.

6. Machine agricole de récolte selon une des revendications 3 à 5, **caractérisée en ce que** l'information contient une recommandation de réglages de machine pour l'utilisateur, laquelle permet d'améliorer la qualité du produit récolté (9).

7. Machine agricole de récolte selon une des revendications 1 à 6, **caractérisée par** un dispositif de commande (22) qui est relié au dispositif d'analyse d'images (6) et qui, en fonction de propriétés détectées du produit récolté (9), commande au moins un organe de travail (11, 12, 13, 14, 17) de la machine de récolte (1) pour améliorer la qualité du produit récolté (9).

8. Machine agricole de récolte selon la revendication 7, **caractérisée en ce que** le dispositif de commande (22) est exploitable pour modifier la longueur de coupe du produit récolté (9) en fonction de la proportion de tiges (20) reconnues dans le produit récolté (9).

9. Machine agricole de récolte selon la revendication 8, **caractérisée en ce que** le dispositif de commande (22) raccourcit la longueur de coupe à mesure que la proportion de tiges augmente.

10. Machine agricole de récolte selon une des revendications 7 à 9, **caractérisée en ce que** le dispositif de commande (22) est exploitable pour introduire ou exécuter une mesure modifiant le comportement de coupe de l'organe hacheur (12) en fonction de la proportion de feuilles d'enveloppe reconnue dans le produit récolté.

11. Machine agricole de récolte selon la revendication 10, **caractérisée en ce que**, en cas de dépassement d'une proportion prescriptible de feuilles d'enveloppe dans le produit récolté (9), le dispositif de commande (22) active un dispositif d'affûtage associé à l'organe hacheur (12) ou un dispositif de réglage de contre-couteaux associé à l'organe hacheur.
